# EUROPEAN PATENT APPLICATION

(11) **EP 2 565 506 A1**
(43) Date of publication of application: **06.03.2013**
(21) Application number: 12182372.8
(22) Date of filing: 30.08.2012
(51) Int. Cl.: F16K 31/383

(54) **Piston valve**

(30) Priority: 31.08.2011 US 201161529407 P
(71) Applicant: Y. Stern Engineering (1989) Ltd., 81222 Yavne (IL)
(72) Inventor: Stern, Yuval, 76832 Ramot Meir (IL)
(74) Representative: Hirschbeck, Stefan

(57) **Abstract**

A piston-type flush valve comprises a housing configured with a fluid inlet port and a fluid outlet port being in flow communication with one another through a flow port, and a piston assembly axially displaceable between a normally closed position in which the flow port is sealed, and an open position. The piston assembly comprises a control chamber which responsive to pressure differential is configured for displacing a sealing assembly from an open position in which fluid flow is facilitated through the flow port, into the normally closed position, and an actuator configured for selectively draining the control chamber into the fluid outlet port, resulting in displacement of the piston assembly into the open position. The control chamber is sealed from the fluid inlet port by a control chamber seal, sealingly displaceable against an anti-friction sleeve articulated to the housing.

## Description

### FIELD OF THE DISCLOSED SUBJECT MATTER

This invention relates to piston-type valves and more particularly it is concerned with such piston-type valves referred to as flush valves and configured for rapid discharging a large amount of fluid and shutting thereafter.

### BACKGROUND OF THE DISCLOSED SUBJECT MATTER

Piston-type valves are well known. Such valves are often used in conjunction with sanitary equipment e.g. toilet bowls, urinal, automated wash basins and the like, and are often referred to as flush valves, are configured for discharging a preset amount of water upon initiating by a manual or automatic signal, i.e. activating by a user, a presence sensor, a timer, etc.

Piston-type flush valves are disclosed, for example in US 8,069,877 directed to a flush valve including a pressure compensating device for toilet and urinals to ensure consistent flush and bowl refill volumes. Certain flush volume limits may required for compliance with federal, state and local regulations regarding water usage. The flush valve can adjust water flow rates within the prescribed water usage limits and does not sacrifice the toilet's bowl washing and waste removal capabilities.

US 7,028,975 discloses a flush valve structure to control flush water through a pressure difference mainly includes a case, a solenoid assembly, an upper intermediate board, a lower intermediate board and a main water ball. The upper intermediate board has a small water pressure release hole. The lower intermediate board has a holding trough mating a medium water valve. The solenoid assembly can open the small water pressure release hole to generate a pressure difference to actuate the medium water valve to form a greater pressure difference so that the main water ball is lifted rapidly to fully open the a main water discharge opening to flush maximum amount of water in a shortest period at the flushing start time.

### SUMMARY OF THE DISCLOSED SUBJECT MATTER

A piston-type flush valve is used for effectively discharging a substantially fixed, predetermined amount of fluid within a relative short time, and sealingly shutting upon said discharge. Such valves are used, by way of example, in conjunction with sanitary equipment, e.g. toilet bowls, urinals, automatic hand washing faucets, etc,.

According to the disclosed subject mater there is provided a piston-type flush valve comprises a housing configured with a fluid inlet port and a fluid outlet port being in flow communication with one another through a flow port, and a piston assembly axially displaceable between a normally closed position in which the flow port is sealed, and an open position; said piston assembly comprising a control chamber which responsive to pressure differential is configured for displacing a sealing assembly from an open position in which fluid flow is facilitated through the flow port, into the normally closed position; and an actuator configured for selectively draining the control chamber into the fluid outlet port, resulting in displacement of the piston assembly into the open position; said control chamber being sealed from the fluid inlet port by a control chamber seal, sealingly displaceable against an anti-friction sleeve articulated to the housing.

According to a particular design of the disclosed piston-type flush valve, the sealing assembly is articulated with the control chamber seal and is axially displaceable responsible to pressure differential within the control chamber, between the closed position in which a flow port seal articulated to the sealing assembly sealingly engages the flow port and wherein fluid flow is prevented, and an open position wherein the sealing assembly is contracted and the flow port is open.

At the closed position the control chamber is pressurized by fluid entailing axial displacement of the sealing assembly into the closed potion, and at the open position the control chamber is drained.

The piston assembly comprises a fluid bleed port extending between the fluid inlet port and the control chamber for pressure build-up within the control chamber after the valve has been momentarily opened for a flushing operation, and whereby said pressure build-up entails displacement of sealing assembly into its closed position.

The housing is further configured with an actuator chamber being in flow communication with the control chamber via an actuator inlet passage, and an actuator outlet port being in flow communication with the outlet port via a drain port and is normally sealed by the actuator plunger of said actuator.

According to another aspect of the present disclosed subject matter there is a provided a housing for a flush valve of the specified type, said housing configured with an anti-friction sleeve articulated to the housing for sealing engagement with control chamber seal sealingly displaceable against said anti-friction sleeve, whereby said control chamber is sealed from the fluid inlet port.

According to the disclosed subject matter there is provided piston-type flush valve comprises a housing configured with a fluid inlet port and a fluid outlet port being in flow communication with one another through a flow port, and a piston assembly axially displaceable between a normally closed position in which the flow port is sealed, and an open position; said piston assembly comprising a control chamber which responsive to pressure differential is configured for displacing a sealing assembly from an open position in which fluid flow is facilitated through the flow port, into the normally closed position; and an actuator configured for selectively draining the control chamber into the fluid outlet port, resulting in displacement of the piston assembly into the open position; said control chamber being sealed from the fluid inlet port by a control chamber seal sealingly displaceable against an anti-friction sleeve articulated to the housing.

Any one or more of the following features and designs can be incorporated in a piston-type flush valve according to the disclosed subject mater, separately or in combination:
- The housing can be made of injected plastic material;
- The anti-friction sleeve can be integrated within the housing by an over-molding process;
- The anti-friction sleeve is made of wear-resistant material, e.g. ceramics, metal, etc.;
- The control chamber seal can be for example an O-ring. According to one example the control chamber seal is a U-shaped seal, having one arm thereof secured to the piston assembly and another arm biased for sliding engagement against the anti-friction sleeve.
- According to a particular design the control chamber seal is a hydraulic seal being in flow communication with the fluid inlet port;
- The actuator plunger is articulated to a operator configured for displacing the actuator plunger between a retracted position and a projecting position; the operator can be a solenoid, a hydraulic actuator, a mechanical actuator, etc.;
- A primary bleed port extends between the inlet port and a fluid accumulating duct, and the fluid bleed port extends from the fluid accumulating duct to the control chamber;
- An override actuator valve can be provided in the housing for forcing the piston valve to open by facilitating displacement of the piston assembly into its open position. Said override actuator valve can be an electric or a mechanical override, which upon activation thereof opens a fluid flow path between the control chamber and the outlet port, thus resulting in pressure drop at the control chamber and thereby opening the valve;
- The fluid bleed port comprises a self-cleaning mechanism in the form of a vibrating needle extending through a restricted-aperture port, thereby governing fluid bleed rate from the fluid inlet port into the control chamber;
- The cross-sectional area of the actuator inlet port (**Aᵢₚ**) is smaller than the cross-sectional area of the actuator outlet port (**Aₒₚ**), and the cross-sectional area of the drain port (**A_{dp}**) is greater than that of the actuator outlet port (Aₒₚ) [Aᵢₚ< Aₒₚ ; A_{dp}>> Aₒₚ];
- The fluid inlet port and the fluid outlet port can extend coaxially or they can be configured at any deferent arrangements, e.g. at a right angle, or inclined with respect to one another, etc.

### BRIEF DESCRIPTION OF THE DRAWINGS

In order to understand the disclosed subject matter and to see how it may be carried out in practice, embodiments will now be described, by way of a non-limiting example only, with reference to the accompanying drawings, in which:

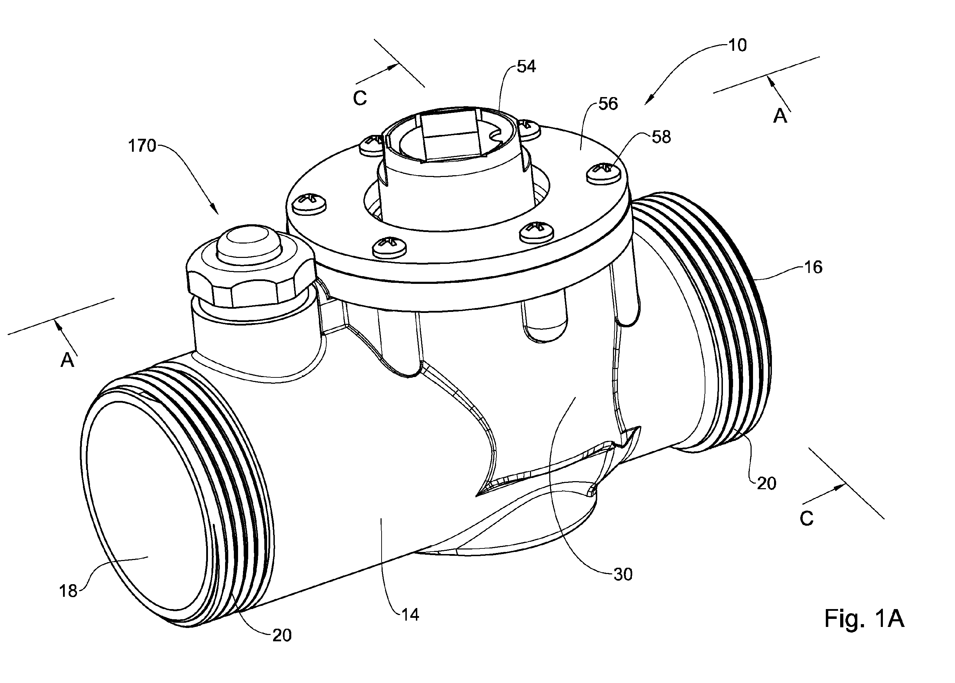

**Fig. 1A** is an overall isometric view of the flush valve according to the present disclosed subject matter

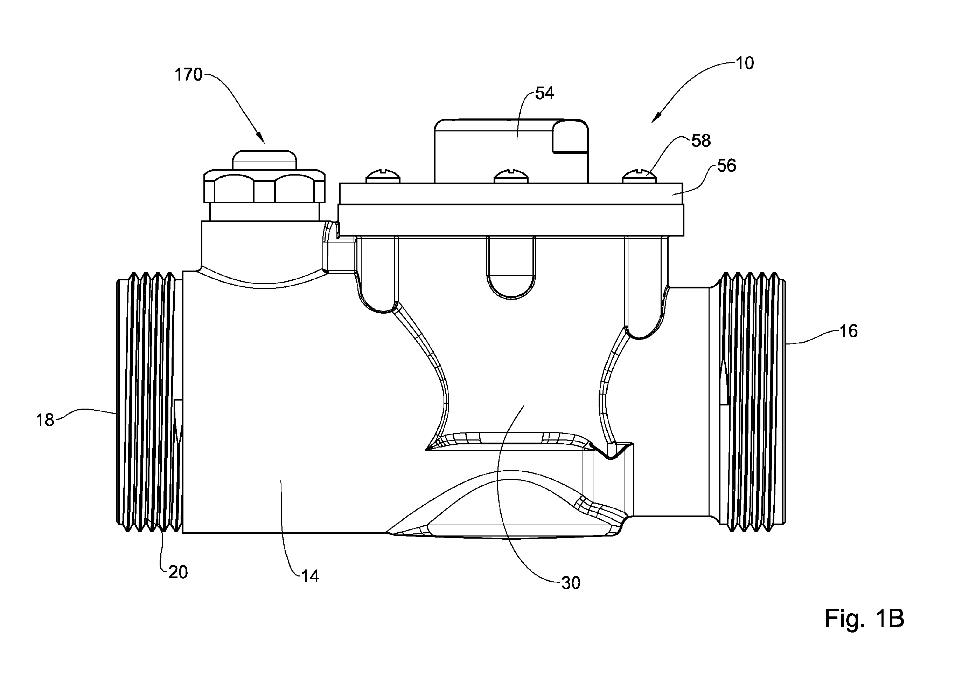

**Fig. 1B** is front view of Fig. 1A;

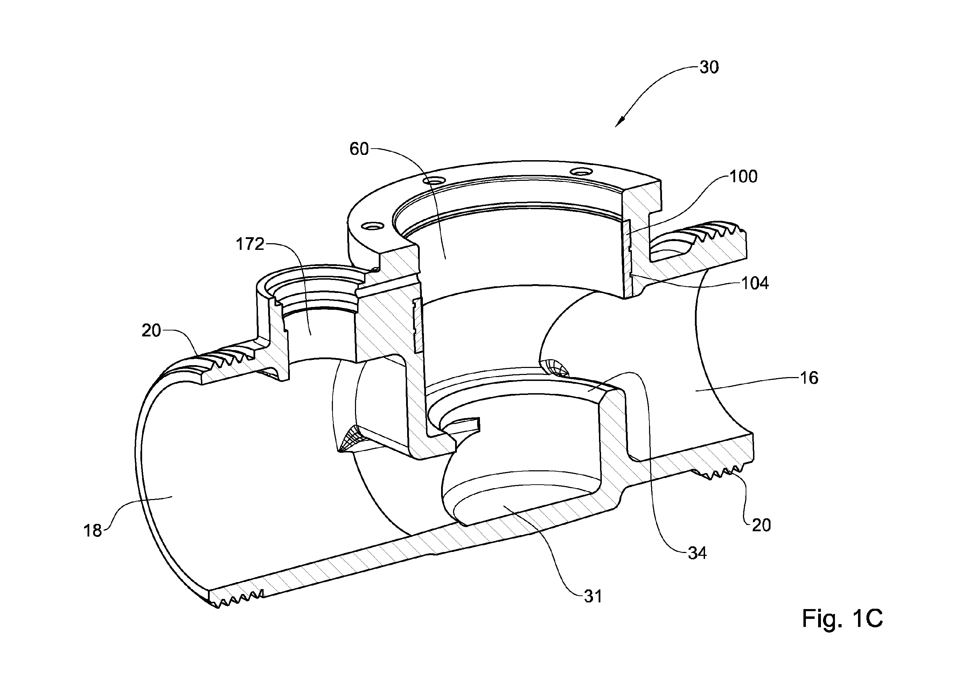

**Fig. 1C** is a longitudinal cross section of the valve of Fig. 1B, showing only the valve housing, however with a friction sleeve fitted therein;
**Fig. 2A** is a longitudinal section along line A-A in Fig. 1A, the flush valve at its normally closed position;
**Fig. 2B** is a longitudinal cross section of the valve of Fig. 1B, the flush valve at its normally closed position;
**Fig. 2C** is longitudinal section along line C-C in Fig. 1A, the flush valve at its normally closed position;
**Fig. 2D** is an enlargement of the portion marked D in Fig. 2A;
**Fig. 2E** is an enlargement of the portion marked D in Fig. 2A, however at the instance of manipulating an activator;
**Fig. 3A** is a longitudinal section along line A-A in Fig. 1A, the flush valve at its open position;
**Fig. 3B** is an enlargement of the portion marked D in Fig. 2A, however with the valve at its closed position; and
**Fig. 4** is an enlarged view of the piston assembly at the closed position.

### DETAILED DESCRIPTION OF EMBODIMENTS

Attention is directed to the annex drawings for understanding the structure and operation of the piston type flush valve according to the presently disclosed subject matter and generally designated **10.** The valve **10** comprises a housing **14** configured with a fluid inlet port **16** and a fluid outlet port **18.**

It is pointed out that while in the present example the fluid inlet port **16** and a fluid outlet port **18** extend coaxially, they can be configured at any deferent arrangements, e.g. at a right angle, or inclined with respect to one another, etc.

In the present example the fluid inlet port **16** and a fluid outlet port **18** are coaxial and are externally threaded at **20** for coupling to a respective fluid inlet line (not shown) and a fluid outlet line (not shown). For example, the valve **10** may be used in conjunction with a sanitary device (not shown; e.g. toilet bowl, wash basin, urinal etc, wherein the fluid inlet port **16** is coupled to a water supply and the fluid outlet port **18** is coupled to the sanitary device.

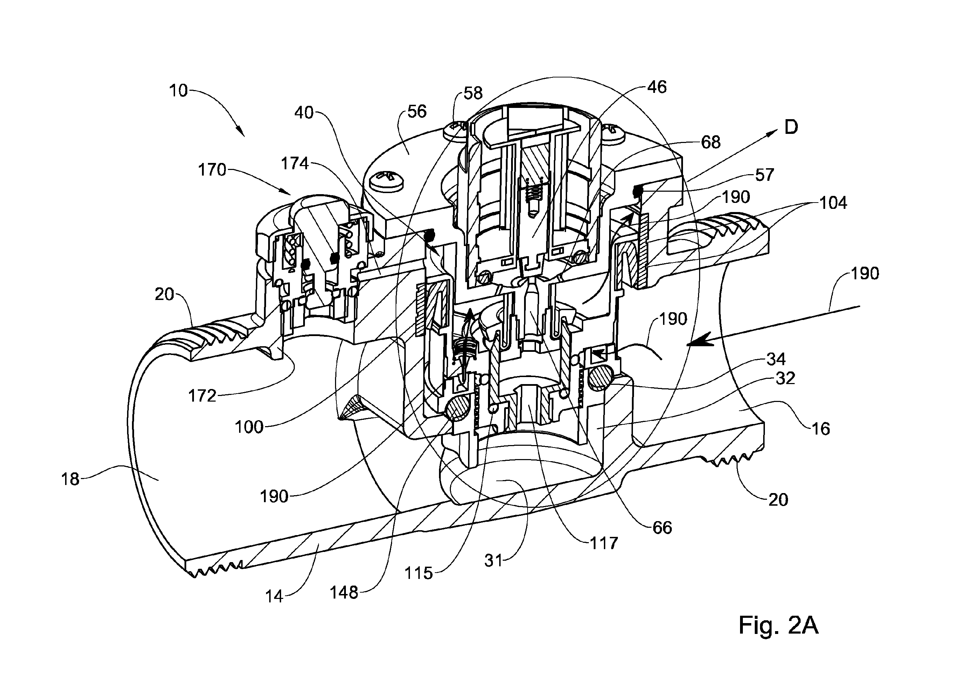

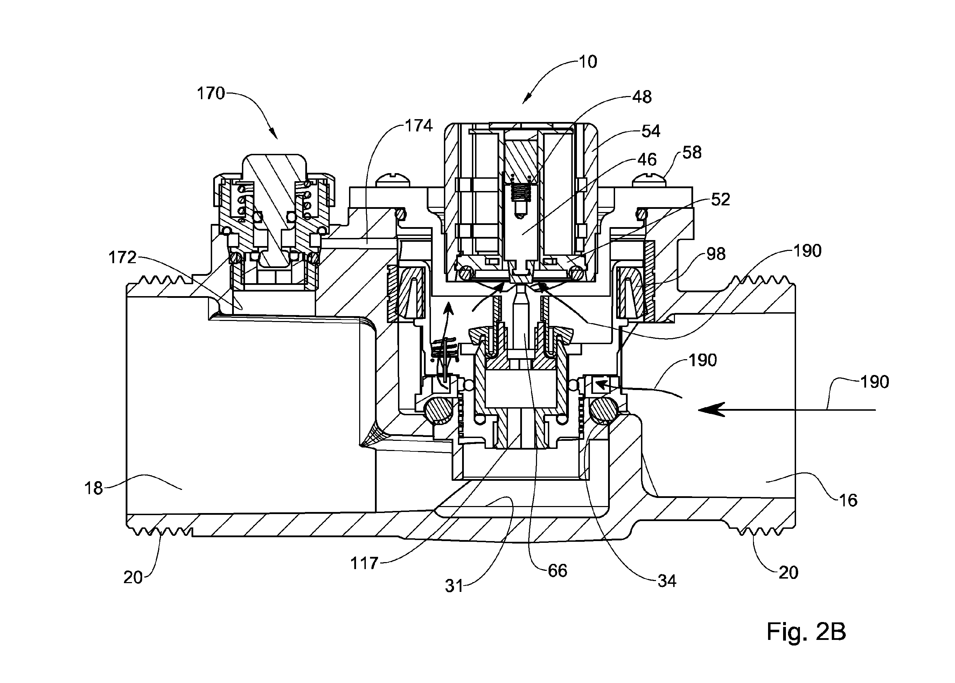

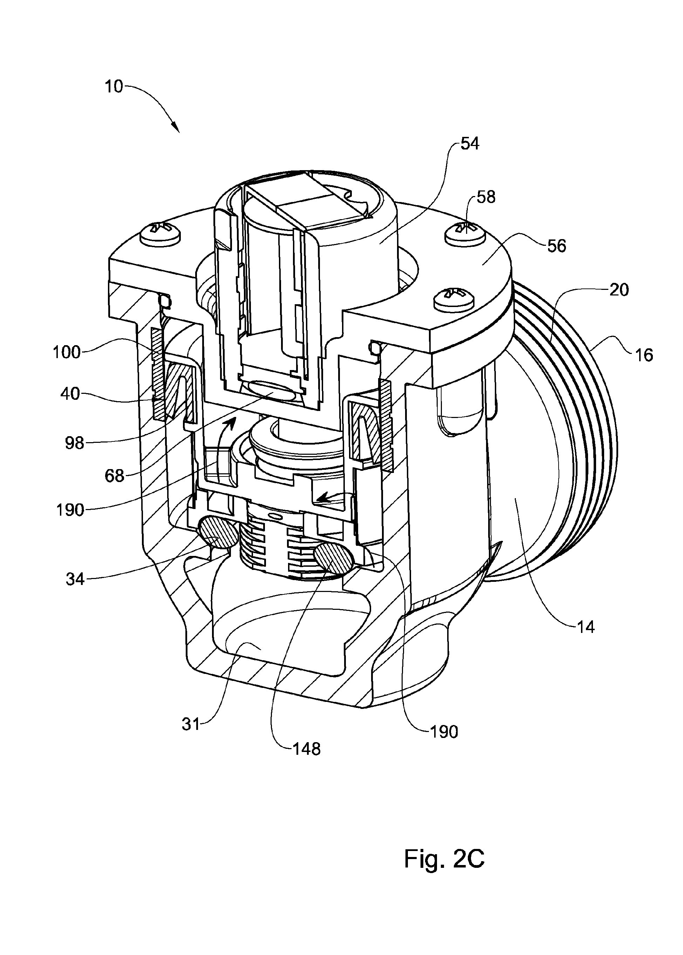

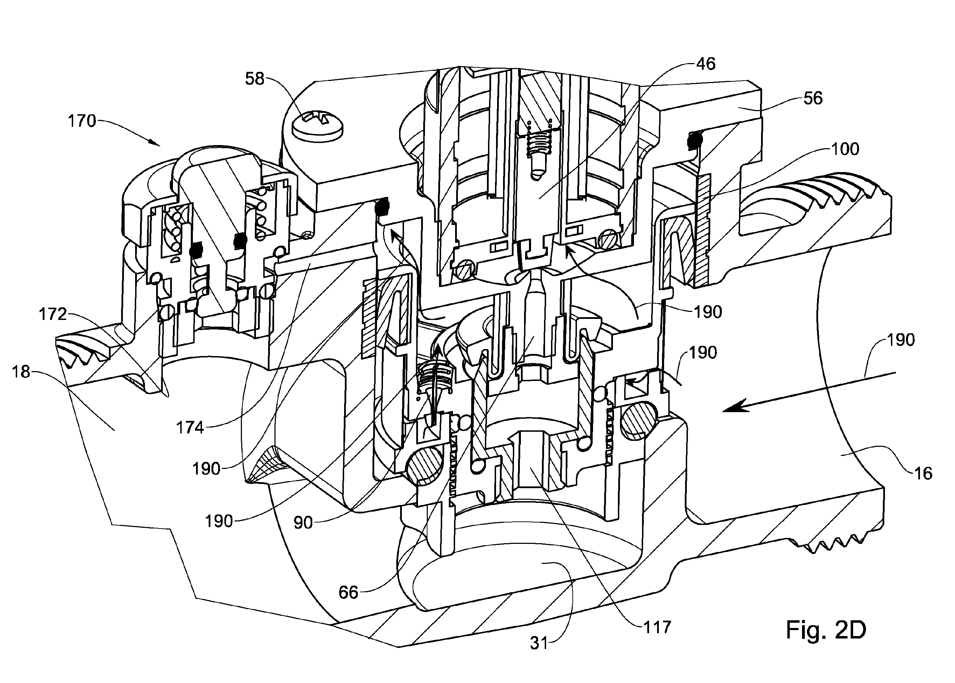

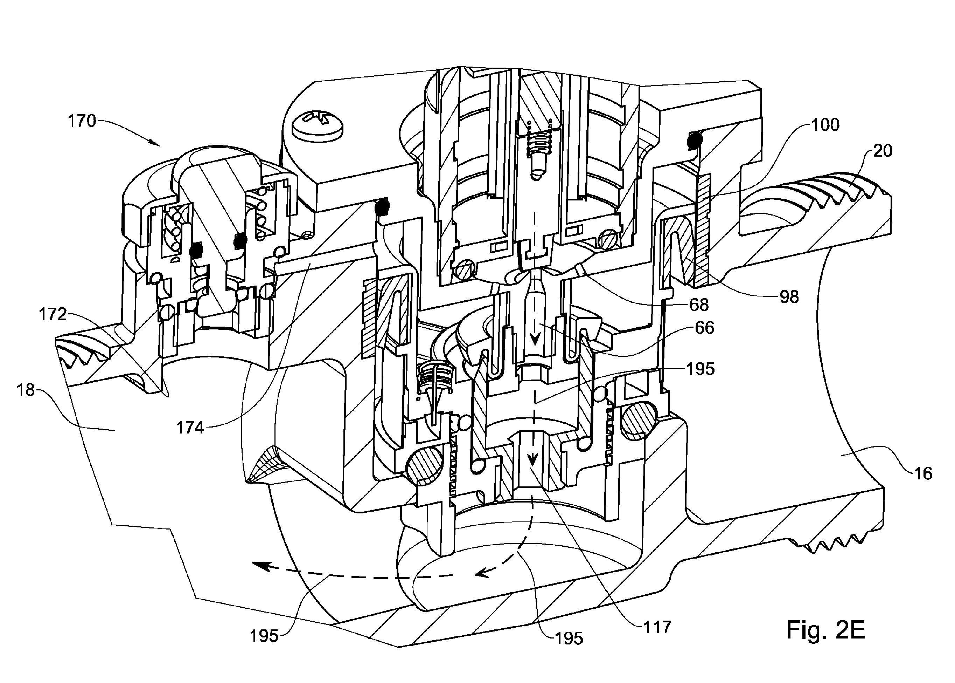

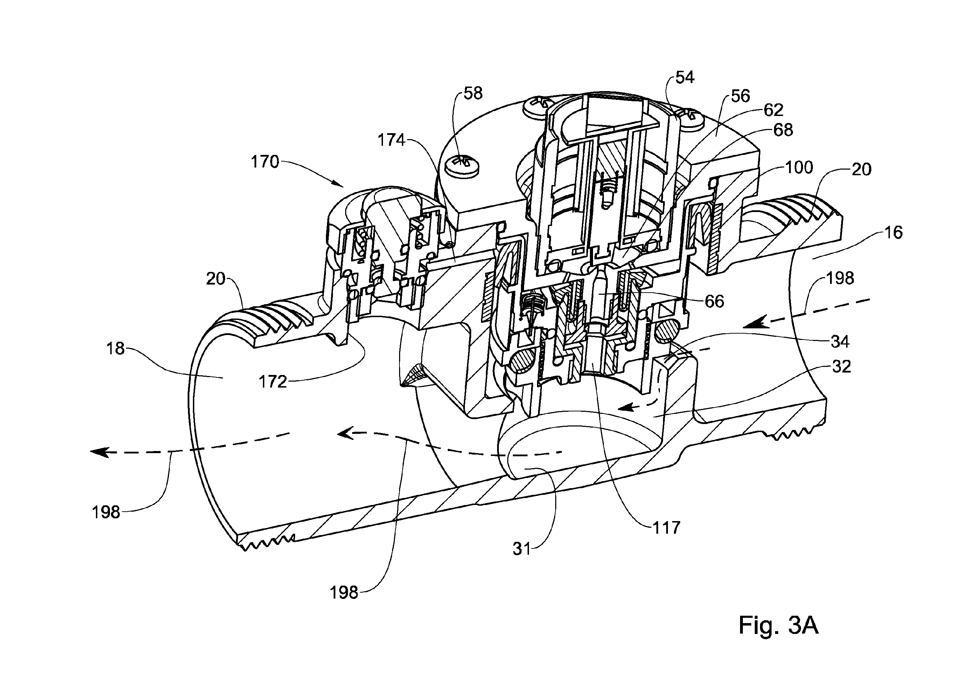

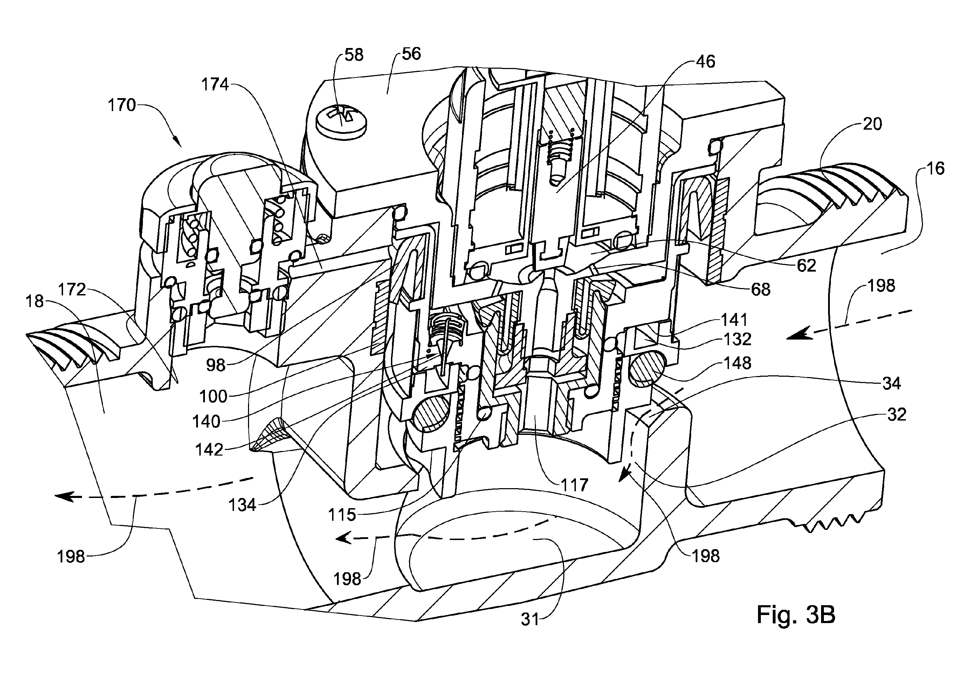

Interposed between the fluid inlet port **16** and the fluid outlet port **18** the housing **14** is configured with an actuating portion **30,** which as can be seen in the sectioned views of Figs. **2** and **3** said portion is configured with a flow port **32** configured with a circular sealing seat **34,** whereby the fluid inlet port **16** and the fluid outlet port **18** are in flow communication with one another via said flow port **32.**

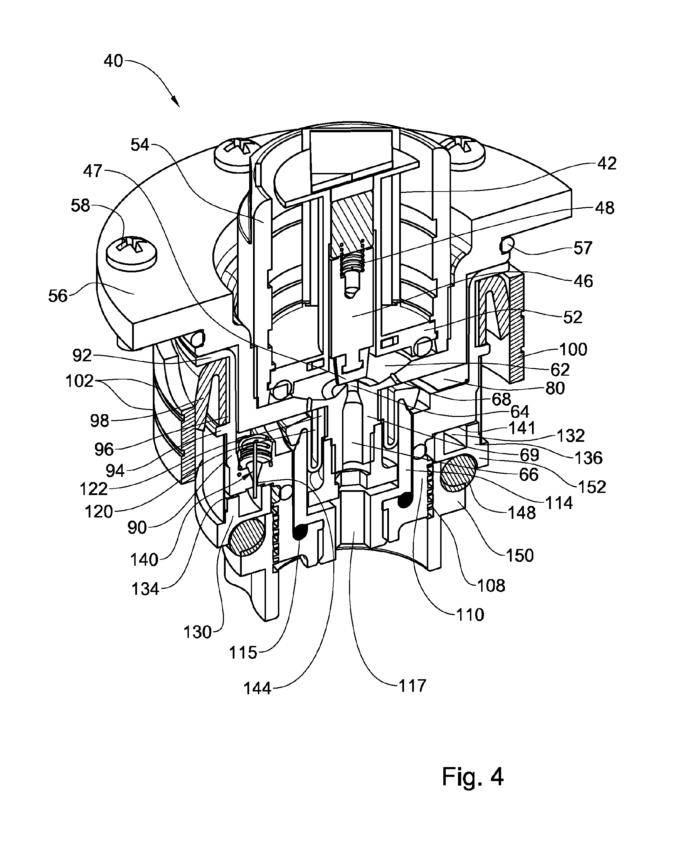

A piston assembly generally designated **40** (seen in Fig. 4 isolated from the valve housing) comprises an actuator **42** (which in the illustrated example is a solenoid) configured with an actuator plunger **46,** fitted with a resilient sealing tip **47** and loaded by a coiled spring **48,** and a sealing member **52** sealingly enveloping the actuator components. The actuator **42** is received within a capsule-like housing **54** secured to a flanged actuator seat **56** which in turn is screw coupled by screws **58** within an opening **60** of the actuating portion of the **30** the housing **14.** It is seen that the actuator seat **56** is fitted with an O-ring **57** sealing against the inner wall of the opening **60** of housing **14.**

The actuator seat **56** is a cylindrical member with a basin **62** configured below the actuator **42** such that actuator plunger **46** coaxially extends over an actuator outlet port (**Aₒₚ**) **64,** extending into a drain port (**A_{dp}**) **66** within a drain extension segment **69,** which as will be explained hereinafter is in flow communication with a basin portion **31** of the housing **14** which in turn is in flow communication with the fluid outlet port **16.** The basin **62** is further configured with one or more actuator inlet ports (**Aᵢₚ**) **68** which as will be explained hereinafter give rise to flow communication between the basin **62** and a control chamber **80** of the piston assembly **40.** The arrangement is such that cross-sectional area of the actuator inlet port (**Aᵢₚ**) is smaller than the cross-sectional area of the actuator outlet port (**Aₒₚ**) i.e. Aᵢₚ< Aₒₚ, and the cross-sectional area of the drain port (**A_{dp}**) is greater than that of the actuator outlet port (Aₒₚ) i.e. A_{dp}>> Aₒₚ.

The piston assembly **40** further comprises, a piston housing **90** extending below the actuator seat **56,** said piston housing configured with an outwardly projecting flanged top wall **92** and an annular rim **94** extending below, forming together a seal housing space designated **96** and accommodating a control chamber seal **98.** In the present example the seal **98** is an inverted U-like seal made of resilient material, though it is appreciated that other forms of seals can be used, e.g. O-rings, hydraulic seals and the like.

The control chamber seal **98** is configured for sealingly sliding against an anti-friction sleeve **100** secured within the opening **60** of housing **14.** It is seen that the anti-friction sleeve **100** is configured with retention grooves **102** arrested by corresponding rims **104** extending from the wall of the opening **60,** for positioning and fixedly arresting the anti-friction sleeve **100.** It is however appreciated that the anti-friction sleeve **100** can be an insert configured for retrofit within the housing **14,** or the housing can be molded over the anti-friction sleeve in a non-removal fashion.

Whilst the housing is typically made of a molded material, e.g. plastic or metal, and as such the inner wall of the opening **60** is relatively rough/coarse, the anti-friction sleeve is made of a material offering smooth surface quality and friction resistant material, and as such can be made of any suitable material e.g. ceramics, bronze, steel, etc.

The piston housing **90** is articulated (e.g. by screw coupling at **108)** with a seal support member **110** such that they are fixed together. The seal support member **110** is configured with a central cup-like portion **114** coaxially extending within the piston housing **90** and over the drain extension segment **69** downwardly extending from the actuator seat **56.** Noted, the cup-like portion **114** is sealingly received within the seal support member **110** with an O-ring **115** provided therebetween. A flow passage **117** extends through the seal support member **110,** being in flow communication with the drain port **(A_{dp}) 66** within a drain extension segment **69** and further with the basin portion **31** and the fluid outlet port **18.**

A resilient U-shaped sealing sleeve **120** is secured within the cup-like portion **114** of the seal support member **110,** configured such that one leg portion **122** is sealingly retained and secured against the drain extension segment **69,** and another leg portion of the seal **120** is sealingly retained and secured at a top of the cup-like portion **114.** This arrangement facilitates axial displacement of the articulated piston housing **90** and seal support member **110** with respect to the actuator seat **56,** however at a sealed configuration.

Clamped between the seal support member **110** and the cup-like portion **114** there is a ring shaped member **130** configured with an annular groove constituting a fluid accumulating duct **132,** the arrangement being such that a narrow gap **134** extends between the outer wall **136** and a bottom surface **141** of the piston housing **90,** said gap serving as a primary bleed port between the fluid inlet port **16** and the annular groove **132,** the purpose of which to become apparent hereinafter.

As can further be seen, the piston housing **90** is configured with fluid bleed port **130** extending between the fluid accumulating duct **132** and the control chamber **180,** said fluid bleed port **140** is cited with a self-cleaning mechanism in the form of a vibrating needle **142** extending through a restricted-aperture aperture **144,** thereby governing fluid bleed rate from the fluid accumulating duct **132** and respectively from the fluid inlet port **16,** into the control chamber **80.**

As can be seen, a flow port sealing O-ring **148** is secured between a lateral support seat **150** of the seal support member **110** and a downward facing support rim **152** of the ring shaped member **130,** whereby the flow port sealing O-ring **148** is tightly secured with only a portion thereof being exposed for sealing engagement with the circular sealing seat **34** of the flow port **32** of the housing **14.**

Further noted, the valve **10** is configured with an override actuator valve generally designated **170** and retained within an opening **172** within housing **14,** for forcing the piston valve to open by facilitating displacement of the piston assembly into its open position. Said override actuator valve **170** can be an electric or a mechanical override, which upon activation thereof opens a fluid flow path **174** formed in the housing **14** between the control chamber **80** and the outlet port **18.** Operation of the override valve **170** will become apparent hereinafter.

In use, the flush valve 10 disclosed hereinabove operates as follows.

At the normally closed position of the valve 10 (Figs. 2), the piston assembly **40** is at its respective closed position whereby the flow port sealing O-ring **148** sealingly bears against the sealing seat **34** of the flow path **32,** thereby preventing fluid flow (e.g. water) between the fluid inlet port **14** and the downstream fluid outlet port **18.** This position is static and will remain so until the valve is manipulated into its open position.

Instantaneously after opening the valve (e.g. a flushing operation) the valve closes into the position disclosed hereinabove, whereby downstream liquid from the inlet port **14** flows through gap **134** into the fluid accumulating duct **132** and respectively through bleed port **140** into the control chamber **80,** and then through actuator inlet ports **(Aᵢₚ) 68** into the basin **62,** as represented by arrowed lines **190.** At this stage discharge of the liquid from the control chamber is prevented.

Once the actuator **42** is manipulated, e.g. upon pressing a knob or activating a proximity sensor or an IR sensor or the like, the plunger 46 retracts thereby opening the flow passage through actuator outlet port **(Aₒₚ) 64** into the drain port **(A_{dp}) 66,** through the flow passage **117** of the seal support member **110** and out through the basin portion **31** and the fluid outlet port **18,** as illustrated by dashed lines **195** (Fig. 3E). This gives rise to instant pressure decrease within the control chamber **80.**

The pressure residing at the inlet port **14** is now higher than that at the control chamber and further, the total cross-section area acting on control chamber components from below is greater than that acting from above, resulting in displacement of the piston housing **90,** with the components articulated thereto, into the open position, i.e. the flow port sealing O-ring **148** disengages from the sealing port **34,** giving rise to opening the flow port **32,** facilitating fluid flow from the fluid inlet port **16,** through the flow port **32** and out to the fluid outlet port **18,** as represented by dash-dotted lines **198** (Figs. 3).

Instantaneously after opening the valve (e.g. a flushing operation) the valve closes into the position disclosed hereinabove, whereby downstream liquid from the inlet port **14** flows through gap **134** into the fluid accumulating duct **132** and respectively through bleed port **140** into the control chamber **80,** and then through actuator inlet ports **(Aᵢₚ) 68** into the basin **62,** as represented by arrowed lines **190.** At this stage discharge of the liquid from the control chamber is prevented.

At the event of malfunction of the actuator **42** or for example upon exhaustion of batteries, a problem occurring with an associated sensor or electric wiring, or a mechanical fault, the valve assembly **10** may still be operated by activation thereof using the override actuator valve **170,** upon which fluid flow path **175** opens, giving rise to fluid discharge and flow from the control chamber **80** directly to the outlet port **18,** resulting in pressure drop at the control chamber, which in turn will facilitate displacing of the valve into the open position as discussed hereinabove.

## Claims

1. A piston-type flush valve comprises a housing configured with a fluid inlet port and a fluid outlet port being in flow communication with one another through a flow port, and a piston assembly axially displaceable between a normally closed position in which the flow port is sealed, and an open position; said piston assembly comprising a control chamber which responsive to pressure differential is configured for displacing a sealing assembly from an open position in which fluid flow is facilitated through the flow port, into the normally closed position; and an actuator configured for selectively draining the control chamber into the fluid outlet port, resulting in displacement of the piston assembly into the open position; said control chamber being sealed from the fluid inlet port by a control chamber seal, sealingly displaceable against an anti-friction sleeve articulated to the housing.

2. A piston-type flush valve according to claim 1, wherein the sealing assembly is articulated with the control chamber seal and is axially displaceable responsible to pressure differential within the control chamber, between the closed position in which a flow port seal articulated to the sealing assembly sealingly engages the flow port and wherein fluid flow is prevented, and an open position wherein the sealing assembly is contracted and the flow port is open.

3. A piston-type flush valve according to claim 1, wherein at the closed position the control chamber is pressurized by fluid entailing axial displacement of the sealing assembly into the closed potion, and at the open position the control chamber is drained.

4. A piston-type flush valve according to claim 1, wherein the piston assembly comprises a fluid bleed port extending between the fluid inlet port and the control chamber for pressure build-up within the control chamber after the valve has been momentarily opened for a flushing operation, and whereby said pressure build-up entails displacement of sealing assembly into its closed position.

5. A piston-type flush valve according to claim 1, wherein the housing is further configured with an actuator chamber being in flow communication with the control chamber via an actuator inlet passage, and an actuator outlet port being in flow communication with the outlet port via a drain port and is normally sealed by the actuator plunger of said actuator.

6. A piston-type flush valve according to claim 1, wherein the control chamber seal is a U-shaped seal, having one arm thereof secured to the piston assembly and another arm biased for sliding engagement against the anti-friction sleeve.

7. A piston-type flush valve according to claim 1, wherein the control chamber seal is a hydraulic seal being in flow communication with the fluid inlet port.

8. A piston-type flush valve according to claim 5, wherein the actuator plunger is articulated to an operator configured for displacing the actuator plunger between a retracted position and a projecting position.

9. A piston-type flush valve according to claim 1, wherein a primary bleed port extends between the inlet port and a fluid accumulating duct, and the fluid bleed port extends from the fluid accumulating duct to the control chamber.

10. A piston-type flush valve according to claim 1, wherein an override actuator valve is provided in the housing for forcing the piston valve to open by facilitating displacement of the piston assembly into its open position, said override actuator valve is configured fir opening a fluid flow path between the control chamber and the outlet port, thus resulting in pressure drop at the control chamber and thereby opening the valve.

11. A piston-type flush valve according to claim 9, wherein the fluid bleed port comprises a self-cleaning mechanism in the form of a vibrating needle extending through a restricted-aperture port, thereby governing fluid bleed rate from the fluid inlet port into the control chamber.

12. A piston-type flush valve according to claim 5, wherein the cross-sectional area of the actuator inlet port is smaller than the cross-sectional area of the actuator outlet port, and the cross-sectional area of the drain port is greater than that of the actuator outlet port.

13. A piston-type flush valve according to claim 1, wherein the anti-friction sleeve is made of wear-resistant material.

14. A housing for a flush valve according to claim 1, said housing configured with an anti-friction sleeve articulated to the housing for sealing engagement with a control chamber seal, sealingly displaceable against said anti-friction sleeve.

15. A housing according to claim 14, wherein the control chamber is sealed from the fluid inlet port.
